# EUROPÄISCHE PATENTANMELDUNG

(11) **EP 3 018 097 A1**
(43) Veröffentlichungstag der Anmeldung: **11.05.2016**
(21) Anmeldenummer: 14192361.5
(22) Anmeldetag: 07.11.2014
(51) Int. Cl.: C01B 31/00

(54) **VERFAHREN FÜR DIE HERSTELLUNG VON PORÖSEN KOHLENSTOFFTEILCHEN MIT HOHEM ASPEKTVERHÄLTNIS MITTELS EINES TEMPLATVERFAHRENS**

(71) Anmelder: Heraeus Quarzglas GmbH & Co. KG, 63450 Hanau (DE)
(72) Erfinder: Neumann, Christian, 35410 Hungen (DE); Becker, Jörg, 61194 Niddatal (DE); Pihan, Sascha, 63743 Aschaffenburg (DE); Otter, Matthias, D-48155 Münster (DE)
(74) Vertreter: Staudt, Armin Walter

(57) **Zusammenfassung**

Ein bekanntes Templatverfahren zur Herstellung poröser Kohlenstoffteilchen mit hohem Aspektverhältnis umfasst folgende Verfahrensschritte: Bereitstellen von Poren enthaltenden nicht sphärischen Templat-Partikeln mit einem Aspektverhältnis von mehr als 3; Infiltrieren der Poren des Templats mit einer Vorläufersubstanz für Kohlenstoff, Carbonisieren der Vorläufersubstanz und Entfernen der Templat-Partikel unter Bildung des porösen Kohlenstofferzeugnisses. Um hiervon ausgehend sowohl ein hohes Aspektverhältnis als auch eine vergleichsweise hohe mechanische Festigkeit der Kohlenstoffteilchen zu gewährleisten, wird erfindungsgemäß vorgeschlagen, dass das Bereitstellen der Templat-Partikel folgende Maßnahmen umfasst: (I): Erzeugen einer Glasschmelze eines Mehrkomponenten-Glases, (II): Bilden nicht-sphärischer Glasteilchen durch Zerteilen der Glasschmelze oder Zerkleinern eines nach Erstarren der Glasschmelze erhaltenen Glases, (III): Erwärmen der nicht-sphärischen Glasteilchen zwecks Phasentrennung in Phasenbereiche unterschiedlicher Zusammensetzung, (IV): mindestens teilweises Extrahieren von einem der Phasenbereiche unter Bildung nichtsphärischer poröser Glasteilchen.

## Beschreibung

### Technischer Hintergrund

Die Erfindung betrifft ein Verfahren für die Herstellung von porösen Kohlenstoffteilchen mit hohem Aspektverhältnis mittels eines Templatverfahren, umfassend folgende Verfahrensschritte:
(a) Bereitstellen von Poren enthaltenden nicht sphärischen Templat-Partikeln mit einem Aspektverhältnis von mehr als 3,
(b) Infiltrieren der Poren des Templats mit einer Vorläufersubstanz für Kohlenstoff,
(c) Carbonisieren der Vorläufersubstanz, und
(d) Entfernen der Templat-Partikel unter Bildung des porösen Kohlenstofferzeugnisses.

Beim Templatverfahren zur Herstellung von porösem Kohlenstoff wird eine Vorläufersubstanz für Kohlenstoff in den Poren eines porösen Templatmaterials abgelagert und durch Erhitzen unter Sauerstoffausschluss zu Kohlenstoff zersetzt. Als Templatmaterialien sind beispielsweise SiO₂-Gel, mittels chemischer Gasphasenabscheidung erzeugte poröse Werkstoffe, poröses Glas, Aluminiumoxid und andere poröse hitzebeständige Oxide bekannt. Die Vorläufersubstanz für Kohlenstoff wird als Flüssigkeit oder als Gas in die Poren des Templats infiltriert. Nach anschließender Carbonisierung wird das anorganische Templatmaterial des Templats entfernt, beispielsweise durch Lösen in NaOH oder in Flusssäure.

Auf diese Weise wird ein partikel- oder flockenförmiges Kohlenstofferzeugnis erhalten, das eine Porenstruktur aufweist, die teilweise eine Replik des vormaligen Templatmaterials darstellt.

### Stand der Technik

Aus der DE 10 2011 014 875 B3 ist ein gattungsgemäßes Verfahren zur Herstellung von porösen Kohlenstoffteilchen mit hohem Aspektverhältnis mittels Templatverfahren bekannt. Die Templatteilchen werden dabei mittels Gasphasenabscheidung erzeugt, indem eine flüssige oder gasförmige Ausgangssubstanz für SiO₂ einer chemischen Reaktion unterzogen und aus der Gasphase als Feststoffkomponente auf einer Ablagerungsfläche in Form einer Schicht aus porösem SiO₂-Ruß (auch als "SiO₂-Soot" bezeichnet) abgeschieden wird. Diese wird zu porösen SiO₂-Templatteilchen zerkleinert, die plättchenförmig oder stäbchenförmig mit einem Aspektverhältnis (auch als "Strukturverhältnis" bezeichnet) von mindestens 5 ausgebildet sind. Unter dem "Aspektverhältnis" wird das Verhältnis von größter Strukturbreite des Templatteilchen und seiner Dicke verstanden. Ein Aspektverhältnis von mindestens 3 bedeutet demnach, dass die größte Strukturbreite eines Templatteilchen mindestens 3-mal größer ist als seine Dicke.

Die SiO₂-Templatteilchen werden zur Herstellung von porösem Kohlenstoff eingesetzt. Dazu werden die Poren mit einer Vorläufersubstanz für Kohlenstoff imprägniert, die Kohlenstoffvorläufersubstanz zu Kohlenstoff carbonisiert und das SiO₂-Templat anschließend entfernt, indem die Kompositmasse aus SiO₂-Templatteilchen und Kohlenstoff in ein Flusssäurebad eingebracht wird. Das danach erhaltene Kohlenstofferzeugnis wird gespült, getrocknet und bei Bedarf weiter zerkleinert.

Es werden Kohlenstoffflocken aus porösem Kohlenstoff erhalten, die eine oligomodale Porengrößenverteilung mit sogenannter "hierarchische Porenstruktur" zeigen. Dabei ist eine feingliedrig zerklüftete Oberfläche vorhanden, die aufgrund von Poren im Nanometerbereich hervorgerufen wird, und die idealerweise über ein durchgängiges makroporöses Transportsystem zugänglich ist. Diese Kohlenstoffflocken eignen sich besonders gut für die Herstellung von Elektrodenschichten aufladbarer Lithium-Batterien.

### Technische Aufgabenstellung

Im Vergleich zu anderen Methoden ist die industrielle Fertigung des SiO₂-Templats mittels Sootabscheidung aus der Gasphase kostengünstig. Durch das schichtweise Abscheiden ergibt sich eine Plättchen- oder Flockenform der Templatteilchen mit zwei im Wesentlichen parallel zueinander verlaufenden großen Oberflächen und demgegenüber geringer Dicke des aufzufüllenden Volumens. Diese Geometrie ist vorteilhaft, denn sie ermöglicht ein rasches und gleichmäßiges Infiltrieren des Porenraums. Dazu trägt bei, dass die Soot-Templatteilchen herstellungsbedingt seitlich Bruchflächen mit offenen Poren aufweisen. Auch über diese Poren erfolgt Infiltration.

Andererseits können durch Soot-Abscheidung erzeugte Templatteilchen eine relative geringe Bruchfestigkeit zeigen, was beispielsweise bei Weiterverarbeitungsschritten nachteilig sein kann, bei denen quer zur planen Oberfläche wirkende Kräfte auf die Templatteilchen einwirken. Zwar ist es möglich, die Festigkeit der Templatteilchen durch eine thermische Verdichtung der Sootschicht beim Sootabscheideprozess in gewissen Grenzen zu variieren und gegebenenfalls zu erhöhen. Diese Maßnahme hat jedoch erhebliche Auswirkungen auf die Poren- und Massenverteilung der Sootschicht und des daraus erhaltenen Templatmaterials. Bei hoher Temperatur besteht zudem die Gefahr, dass sich oberflächennahe Porenkanäle verengen oder verschließen, was ein homogenes Infiltrieren erschwert.

Der Erfindung liegt daher die Aufgabe zugrunde, ein Verfahren für die Herstellung von porösen Kohlenstoffteilchen unter Einsatz eines Templatmaterials anzugeben, das sowohl ein hohes Aspektverhältnis als auch eine vergleichsweise hohe mechanische Festigkeit aufweist.

### Allgemeine Darstellung der Erfindung

Diese Aufgabe wird ausgehend von einem Verfahren der eingangs genannten Gattung erfindungsgemäß dadurch gelöst, dass das Bereitstellen der Templat-Partikel umfasst:
(I) Erzeugen einer Glasschmelze eines Mehrkomponenten-Glases,
(II) Bilden nicht-sphärischer Glasteilchen durch Zerteilen der Glasschmelze oder Zerkleinern eines nach Erstarren der Glasschmelze erhaltenen Glases,
(III) Erwärmen der nicht-sphärischen Glasteilchen zwecks Phasentrennung in Phasenbereiche unterschiedlicher Zusammensetzung,
(IV) mindestens teilweises Extrahieren von einem der Phasenbereiche unter Bildung nicht-sphärischer poröser Glasteilchen.

Als Templatmaterial werden poröse, nicht-sphärische Glasteilchen mit einem hohen Aspektverhältnis eingesetzt, die durch Extraktion von phasengetrenntem Glas erhalten werden. In "phasengetrenntem Glas" bilden sich durch thermische Behandlung mindestens zwei Phasen, die sich in ihrer Zusammensetzung unterscheiden. Die erste der beiden Phasen - die Matrix - ist nach der thermischen Behandlung weiterhin glasig-amorph; die zweite Phase ist entweder amorph oder kristallin. Die Phasen sind unterschiedlich resistent gegen Wasser, Säuren oder Basen, so dass sich die eine Phase beim Extrahieren im Extremfall vollkommen entfernen lässt.

Bekannte Beispiele sind Alkaliborosilikatgläser aus dem ternären System M₂OB₂O₃-SiO₂, wobei M₂O für ein Alkalioxid steht. Das daraus erschmolzene Glas zeigt in einem als "Vycor-Glas" ("Vycor" ist eine eingetragene Marke von Corning. Inc., USA) bekannten Zusammensetzungsbereich eine Entmischungslücke. Die Matrix des entmischten Glases bildet ein starres und inkompressibles SiO₂-Netzwerk, das sich durch hohe chemische, thermische und mechanische Stabilität auszeichnet. Darin eingebettet ist eine natriumreiche Borsäurephase, die in Mineralsäure löslich ist. Durch vollständiges oder teilweises Extrahieren der zweiten Phase kann in der Matrix in reproduzierbarer Weise eine weitgehend monodisperse Porengrößenverteilung mit Poren im Porengrößenbereich von 1-1000 nm erzeugt werden, ohne dass die mechanische Stabilität des glasigen Netzwerks dadurch übermäßig verändert oder beeinträchtigt wird.

Dementsprechend wird auch beim erfindungsgemäßen Verfahren bevorzugt eine Glasschmelze aus einem Mehrkomponenten-Glas erzeugt, das Siliziumoxid, Boroxid und ein Alkalioxid enthält. Der Mengenanteil an Bor- und Alkalioxid bestimmt maßgeblich den Volumenanteil der zweiten Phase und damit die Porosität des Templatmaterials. Der SiO₂-Anteil ist maßgeblich für die Stabilität des Glasgerüstes des Templatmaterials. Im System M₂O-B₂O₃-SiO₂ liegt die Mischungslücke beispielsweise in einem Zusammensetzungsbereich mit SiO₂-Gehalten zwischen etwa 30 und 75 Gew.-%

Im Hinblick darauf wird bei einer bevorzugten Verfahrensweise der Anteil an SiO₂ im Mehrkomponentenglas Bereich zwischen 40 und 70 Gew.-%, bevorzugt im Bereich zwischen 50 und 65 Gew.-%, eingestellt.

Bei einem SiO₂-Anteil von weniger als 40 Gew.-% kann sich in den Templatteilchen eine hohe - oder bei unvollständiger Extraktion der zweiten, auslaugbaren Phase - eine merklich inhomogene Porosität ergeben. Das resultierende Glasnetzwerk ist mechanisch weniger stabil, was die Weiterverarbeitung der Templatteilchen erschweren kann, insbesondere bei Templatmaterial-Teilchen mit geringer Dicke - wie hier. Vorzugsweise liegt daher die Untergrenze des SiO₂-Anteils im Mehrkomponentenglas (vor dem Extrahieren der zweiten Phase) bei 50 Gew.-%.

Bei einem SiO₂-Anteil von mehr als 70 Gew.-% werden zwar mechanisch sehr stabile Templatteilchen erzeugt, die jedoch eine geringe Porosität zeigen. Die daraus in einem Templatprozess erzeugten Kohlenstoffteilchen haben einen großen Porenraum und sind fragil. Vorzugsweise liegt daher die Obergrenze des SiO₂-Anteils im Mehrkomponentenglas (vor dem Extrahieren der zweiten Phase) bei 65 Gew.-%.

Als geeigneter Kompromiss zwischen ausreichend hoher mechanischer Robustheit der Templatteilchen einerseits und der mechanischen Stabilität und Porosität der daraus erzeugten porösen Kohlenstoffteilchen andererseits hat es sich erwiesen, wenn die nach dem Extrahieren erhaltenen Glasteilchen eine relative Dichte - bezogen auf die spezifische Maximaldichte des Werkstoffs - im Bereich von 40 % bis 70 %, vorzugsweise im Bereich von 50 % bis 65 %, aufweisen.

Das phasengetrennte Mehrkomponenten-Glas des Systems M₂O-B₂O₃-SiO₂ zeigt ein für sogenannte spinodale Entmischungen typische Durchdringungsgefüge. Es kann weitere Komponenten enthalten. So hat es sich beispielsweise gezeigt, dass der Phasentrennungs- und Extraktionsprozess einfacher gesteuert werden kann, wenn zusätzlich Al₂O₃ enthalten ist.

Eine Besonderheit des erfindungsgemäßen Verfahrens liegt darin, dass das phasengetrennte Glas in Form nicht-sphärischer Glasteilchen mit hohem Aspektverhältnis vorliegt. Dieses wird erreicht, indem die Glasschmelze zerteilt oder nach Erstarren der Glasschmelze erhaltene Glaskörper in kleine Partikel zerkleinert werden.

Bei einer bevorzugten Verfahrensvariante wird die Glasschmelze durch Zerstäuben mittels eines Gasstroms oder durch Schleudern in die nicht-sphärischen Glasteilchen zerteilt.

Dabei entstehen vorzugsweise tropfen-, plättchen- oder stäbchenförmige Glasteilchen mit einem Aspektverhältnis von mindestens 3, vorzugsweise von mindestens 5 oder noch besser mindestens 10, die eine mittlere Dicke von weniger als 50 µm, besonders bevorzugt weniger als 10 µm haben.

Bei einer anderen, gleichermaßen bevorzugten Verfahrensvariante wird die Glasschmelze durch Zerfasern in die nicht-sphärischen Glasteilchen zerteilt.

Methoden zum Zerfasern einer Glasschmelze sind zur Herstellung von Mineralwolle oder Glaswolle bekannt. Dabei wird die Glasschmelze beispielsweise in eine sich drehende Siebtrommel eingebracht und in Form dünner Fasern ausgeschleudert. Querschnittsform und Dicke der Fasern werden von der Viskosität der Glasschmelze und dem Öffnungsquerschnitt der Siebtrommel-Öffnungen bestimmt. Es bilden sich stäbchen- oder faserförmigen Glasteilchen mit sehr hohem Aspektverhältnis und einer mittleren Dicke von bevorzugt weniger als 50 µm, besonders bevorzugt weniger als 10 µm.

Die Glasteilchen werden wie oben bereits erläutert unter Bildung phasengetrennter Glasteilchen erwärmt, und eine der Phasen wird ganz oder teilweise unter Bildung der gewünschten porösen Glasteilchen extrahiert. Diese porösen Glasteilchen sind nicht-sphärisch und haben ein hohes Aspektverhältnis von mindestens 3, was mit kurzen Infiltrationsstrecken einhergeht, die ein homogenes und schnelles Infiltrieren der Poren mit Kohlenstoff-Vorläufersubstanz ermöglichen. Kurze Infiltrationsstrecken werden insbesondere benötigt, wenn monodisperse kleine Poren homogen infiltriert werden sollen. Die Infiltrationsstrecke wird maßgeblich durch die kurze Teilchenabmessung - also die Teilchendicke - bestimmt (die maximale Infiltrationsstrecke entspricht etwa der halben Teilchendicke). Das hohe Aspektverhältnis in Verbindung mit der geringen Teilchendicke gewährleistet eine große Oberfläche für die Infiltration bei gleichzeitig kurzer Infiltrationsstrecke.

Insbesondere im Hinblick auf eine schnelle und homogene Infiltration hat es sich außerdem als vorteilhaft erwiesen, wenn in den nicht-sphärischen, porösen Glasteilchen Poren mit Porengrößen von mehr als 10 nm, bevorzugt Porengrößen von mehr als 50 nm und besonders bevorzugt Porengrößen von mehr als 100 nm erzeugt werden.

Die Poren liegen hierbei in der Regel als nicht-runde, langgestreckte Hohlräume, wie etwa in Form von hohlen Kanälen vor. Die "Porengröße" bezeichnet dabei den minimalen Öffnungsquerschnitt des Porenkanals. Er kann mikroskopisch ermittelt oder mittels eines Porosimeters gemessen werden. Dabei wird eine nicht benetzende Flüssigkeit (wie beispielsweise Quecksilber) unter Einwirkung eines äußeren Druckes in die Poren des porösen Materials gegen die entgegenwirkenden Oberflächenspannungskräfte gepresst. Die dazu benötigte Kraft ist umgekehrt proportional zur Porengröße und daher kann neben dem Porengesamtvolumen auch die Porengrößenverteilung der Probe ermittelt werden. Die Quecksilberporosimetrie erfasst nur Porengrößen oberhalb von 2 nm (Mesoporen und Makroporen).

Bei der Weiterverarbeitung der porösen Glasteilchen oder beim Einsatz zur Herstellung von porösem Kohlenstoff können nasschemische Prozesse, begleitet von Filtervorgängen, anfallen. Dabei hat es sich hinsichtlich einer guten Handhabbarkeit der Glasteilchen als vorteilhaft erwiesen, wenn die minimale Ausdehnung etwa das Doppelte der verwendeten Filterporengröße entspricht.

Im Hinblick darauf werden beim Verfahrensschritt (II) bevorzugt nicht-sphärische Glasteilchen erzeugt, die eine Längserstreckung von 50 µm oder mehr, bevorzugt eine Längserstreckung von 100 µm oder mehr haben.

Für die nasschemische Verarbeitung derartiger Glasteilchen können beispielsweise Standardfilter auf Cellulosebasis oder auf Gewebebasis mit einer Filterporengröße von 25 µm eingesetzt werden, die eine schnelle und effiziente Filtration gewährleisten. Als Längserstreckung wird dabei die längste Teilchenabmessung senkrecht zur Teilchendicke bezeichnet.

### Ausführungsbeispiel

Nachfolgend wird die Erfindung anhand eines Ausführungsbeispiels und einer Zeichnung näher erläutert. Dabei zeigt in schematischer Darstellung
- **Figur 1**: ein poröses Glasteilchen in Flockenform als Ausgangsmaterial für eine templatgestützte Herstellung von porösem Kohlenstoff gemäß der Erfindung
- **Figur 2**: ein poröses Glasteilchen in Faserform als Ausgangsmaterial für eine templatgestützte Herstellung von porösem Kohlenstoff gemäß der Erfindung.

### Beispiel 1: Herstellung von Flocken aus phasengetrenntem Glas

In einer Schmelzwanne mit einem Bodenauslass wird eine homogene Natriumborosilikat-Glasschmelze mit folgender Zusammensetzung erzeugt:
SiO₂: 60 Gew.-% ;
B₂O₃: 33 Gew.-%
Na₂0: 7 Gew.-%

Die Glasschmelze wird anhand eines Verfahrens in plättchenartige, flockenartige Glasteilchen zerteilt, wie es in der EP 0 289 240 A1 beschrieben ist. Dabei gelangt ein durch den Bodenauslass vertikal nach unten austretender Schmelzstrahl in einen nach oben offenen, rotierenden Zentrifugenbecher. Infolge der Zentrifugalkraft wird die Schmelze vom Oberrand des Zentrifugenbechers in radialer Richtung nach außen geschleudert und erstarrt dabei als dünner Glasfilm. Der Glasfilm wird in einem Spalt geführt, der zwischen zwei Platten erzeugt wird und der in einer Unterdruckkammer mündet. In der Unterdruckkammer zerbricht der dünne Glasfilm in feine Glasplättchen, die in einem angeschlossenen Zyklon klassiert werden.

Die nominale Dicke der Glasplättchen beträgt 15 µm. Sie wird über die Dicke des Glasfilms vorgegeben, der wiederum von der Viskosität der Glasschmelze, der Rotationsgeschwindigkeit des Zentrifugenbechers, der Spaltweite und dem Grad des im Spalt herrschenden Unterdrucks abhängt. Die seitlichen Abmessungen der Glasplättchen variieren stark; sie können durch nachfolgende Brech- oder Mahlprozesse eingestellt werden.

Für die weitere Bearbeitung werden Natriumborosilikat-Glasplättchen mit seitlichen Abmessungen zwischen 50 µm und 200 µm ausgewählt. Das Aspektverhältnis dieser Glasteilchenfraktion liegt somit bei mindestens 4. Diese werden bei einer Temperatur von 700 °C über 2 Stunden behandelt, um eine Phasentrennung zu erzielen.

### Beispiel 2: Herstellung von Filamenten aus phasengetrenntem Glas

Eine Glasschmelze wird anhand eines üblichen Verfahrens zur Herstellung von Mineralwolle, wie es beispielsweise in der WO 2006/095231 A1 beschrieben ist, zu faserartige Glasteilchen zerteilt. Dazu wird ein Pulver mit der Zusammensetzung von Beispiel 1 zu einer Glasschmelze erschmolzen und diese in eine rotierbare Schmelztrommel eingeführt, die eine Seitenwand mit einer Vielzahl von Öffnungen aufweist. Bei rotierender Schmelztrommel wird die Glasschmelze infolge der Zentrifugalkraft nach außen gedrückt, so dass sie in Form dünner Fasern (Filamente) aus den Wandungsöffnungen austritt. Es entsteht ein Faservlies, das auf einem Transportband durch einen Härteofen transportiert wird.

Beim Austreten der Fasern aus den Seitenwandöffnungen werden diese von einem heißen Gasstrom erfasst, der von einem oberhalb der Schmelztrommel angeordneten Ringbrenner erzeugt wird. Der heiße Gasstrom reißt die Fasern in radialer Richtung mit. Je nach Strömungsgeschwindigkeit des heißen Gases werden die Fasern mehr oder weniger stark nach unten abgelenkt. Mittels eines Radialgebläses, das zusätzlich zum Ringbrenner um den Umfang der Schmelztrommel angeordnet ist, wird ein zusätzlicher, in radialer Richtung auf die Fasern gerichteter Heißluftstrom erzeugt, der die Bewegungsrichtung und Bewegungsgeschwindigkeit der Fasern innerhalb des heißen Gasstroms beeinflusst. Dadurch kann das Zeitfenster, innerhalb dem die Fasern nach dem Austreten aus der Schmelztrommel in einem formbaren, viskosen Zustand sind verändert und damit Dicke und Länge der Fasern eingestellt werden, bevor sie abreißen und auf das Transportband fallen.

Der nominale Filamentdurchmesser beträgt 15 µm. Es wird im Wesentlichen von der Viskosität der Glasschmelze und von der Stärke, Temperatur und Richtung des einstellbaren Heißluftstroms vorgegeben. Die Längenabmessungen der Glasfilamente variieren stark; sie können durch nachfolgende Brech- oder Mahlprozesse eingestellt werden.

Für die weitere Bearbeitung werden Natriumborosilikat-Fasern mit Längen zwischen 60 µm und 200 µm ausgewählt. Das Aspektverhältnis dieser Glasteilchenfraktion liegt somit bei mindestens 4. Diese werden bei einer Temperatur von 700 °C über 1 Stunde behandelt, um eine Phasentrennung zu erzielen.

### Extraktion

Die plättchen- und faserförmigen Glasteilchen aus dem phasengetrennten Natriumborosilikatglas werden anschließend in 3N Schwefelsäure (Feststoff-Flüssigkeits-Verhältnis 1 : 25) bei einer Temperatur von 90 °C 2 Stunden lang unter Rühren behandelt. Die überstehende Lösung wird dekantiert und der Feststoff über ein Gewebefilter mit einer Filterporenweite von 25 µm abgesaugt und mit destilliertem Wasser mehrfach gewaschen. Die Trocknung erfolgt an Luft.

Die resultierenden offenporigen Glasteilchen bestehen zu etwa 97 Gew.-% aus SiO₂, etwa 2,5 Gew.-% B₂O₃ und geringen Mengen an Na₂O. Die Porengrößen liegen bei einem (arithmetischen) Mittelwert von 80 nm mit einer Mittelwertabweichung von etwa 10 %. Die Porosität der Glasteilchen zeigt sich in seiner relativen Dichte, die bei 60 % der Dichte von Quarzglas liegt.

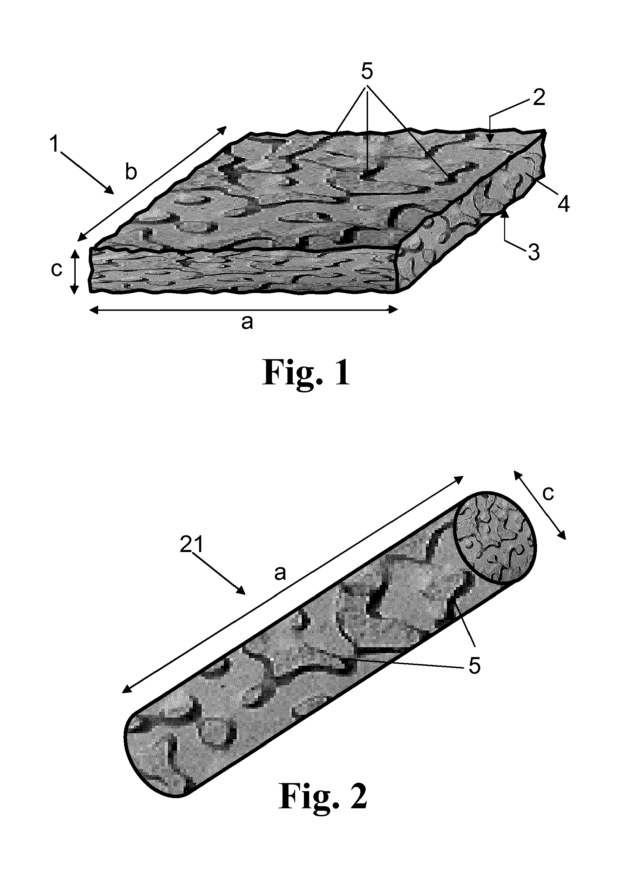

**Figur 1** zeigt schematisch ein derartiges offenporöses, nicht sphärisches und plättchenförmiges Glasteilchen 1, wie es beispielsweise anhand der in Beispiel 1 beschriebenen Methode erzeugt werden kann. Das Glasteilchen 1 hat eine mehr oder weniger plane Oberseite 2 und eine parallel dazu verlaufende Unterseite 3 sowie seitliche Bruchflächen 4. Die Dickenabmessung ist mit "c" bezeichnet und die beiden seitlichen Abmessungen mit "a" und "b". Das Aspektverhältnis "A", also das Verhältnis von größter Strukturbreite (a oder b) und Dicke (c) der Glasteilchen 1 beträgt im Ausführungsbeispiel etwa 6. Alle Oberflächen 2, 3, 4 zeigen eine Vielzahl offener Poren 5 in Form von Porenkanälen mit ungefähr gleicher Porengröße (minimaler Öffnungsquerschnitt der Porenkanäle).
**Figur 2** zeigt schematisch ein offenporiges, nicht sphärisches und faserförmiges Glasteilchen 21, wie es beispielsweise anhand der in Beispiel 2 beschriebenen Methode und anschließender Extraktion der borhaltigen Phase erhalten werden kann. Die Längenabmessung des faserförmigen Glasteilchen 21 ist mit "a" bezeichnet und der Durchmesser mit "c", was in diesem Fall der "Dicke" des Glasteilchens entspricht. Das Aspektverhältnis "A", also das Verhältnis von größter Strukturbreite (a) und Dicke (c) der Glasteilchen 21 liegt im Ausführungsbeispiel im Bereich zwischen 4 und etwa 13. Alle Oberflächen zeigen eine Vielzahl offener Poren 5 in Form von Porenkanälen mit ungefähr gleicher Porengröße (=minimaler Öffnungsquerschnitt der Porenkanäle).

### Beispiel 1 - Herstellung von porösen Kohlenstoffflocken

Die anhand Beispiel 1 mit anschließender Phasentrennung und Extraktion erzeugten plättchen- oder flockenförmigen porösen Glasteilchen 1 dienen als Templatmaterial für die Herstellung poröser Kohlenstoffflocken. Zu diesem Zweck werden sie mit fein gemahlenem Pechpulver im Volumenverhältnis 1:1 (Pech: Glasteilchen) homogen miteinander vermischt und die Partikelmischung wird auf eine Temperatur von 300°C erhitzt.

Das niedrig viskose Pech umhüllt die kleinen Glasteilchen und dringt in die Poren ein und infiltriert diese. Das Verhältnis von Pech- und Glasteilchenvolumen ist dabei so gewählt, dass das Pech die Poren soweit füllt, dass einerseits kein nennenswertes freies Porenvolumen mehr übrig bleibt und andererseits die Schmelze nahezu vollständig verbraucht wird.

Nach einer Infiltrationsdauer von 30 min wird die Temperatur auf 700 °C erhöht und das Pech dadurch carbonisiert. Es bildet sich eine poröse Kompositmasse aus nicht sphärischen porösen Glasteilchen, die mit ebenfalls porösem Kohlenstoff belegt sind und deren Poren nahezu vollständig damit gefüllt sind.

Die Glasteilchen werden anschließend entfernt, indem die Kompositmasse in ein Flusssäurebad eingebracht wird. Nach dem Wegätzen der Glasteilchen wird ein Vorprodukt aus porösem Kohlenstoff erhalten, dessen Struktur im Wesentlichen ein Negativabdruck der ursprünglichen, porösen Glasteilchen darstellt. Das vormals von Glas belegte Volumen bildet dabei einen durchgängigen, dreidimensionalen Porenraum aus relativ großen, miteinander verbundene Poren (Makroporen), die umgeben sind von einer porösen Kohlenstoffmasse.

Das so erhaltene Kohlenstofferzeugnis wird gespült, getrocknet und bei Bedarf weiter zerkleinert. Die dabei erhaltenen Kohlenstoffflocken zeigen in etwa die Abmessungen der vormaligen Glasteilchen; insbesondere auch das entsprechende Aspektverhältnis von etwa 5. Eine Messung der spezifischen inneren Oberfläche nach der BET-Methode ergibt Messwerte um 50 m²/g.

Die "spezifische Oberfläche (BET)" wird nach der Methode von Brunauer, Emmet und Teller (BET) anhand der DIN 66132 ermittelt und basiert auf Gasabsorption an der zu messenden Oberfläche.

### Beispiel 2 - Herstellung von porösen Kohlenstofffilamenten

Die anhand Beispiel 2 mit anschließender Phasentrennung und Extraktion erzeugten faserförmigen und offenporigen Glasteilchen dienen ebenfalls als Templatmaterial für die Herstellung poröser Kohlenstoffflocken. Zu diesem Zweck werden sie mit fein gemahlenem Pechpulver im Volumenverhältnis 1:1 (Pech: Glasteilchen) homogen miteinander vermischt und die Partikelmischung wird auf eine Temperatur von 300°C erhitzt.

Das niedrig viskose Pech umhüllt die kleinen Glasteilchen und dringt in die Poren ein und infiltriert diese. Das Verhältnis von Pech- und Glasteilchenvolumen ist dabei so gewählt, dass das Pech die Poren soweit füllt, dass einerseits kein nennenswertes freies Porenvolumen mehr übrig bleibt und sich andererseits die Schmelze nahezu vollständig verbraucht.

Nach einer Infiltrationsdauer von 30 min wird die Temperatur auf 700 °C erhöht und das Pech dadurch carbonisiert. Es bildet sich eine poröse Kompositmasse aus nicht sphärischen porösen Glasfasern, die mit ebenfalls porösem Kohlenstoff belegt sind und deren Poren nahezu vollständig damit gefüllt sind.

Die Glasmasse wird anschließend entfernt, indem die Kompositmasse in ein Flusssäurebad eingebracht wird. Es wird ein Vorprodukt aus porösem Kohlenstoff erhalten, dessen Struktur im Wesentlichen ein Negativabdruck der ursprünglichen, porösen Glasfasern darstellt. Das vormals von Glas belegte Volumen bildet dabei einen durchgängigen, dreidimensionalen Porenraum aus relativ großen, miteinander verbundene Poren (Makroporen), die umgeben sind von einer porösen Kohlenstoffmasse.

Das so erhaltene Kohlenstofferzeugnis wird gespült, getrocknet und bei Bedarf weiter zerkleinert. Die dabei erhaltenen Kohlenstofffilamente zeigen in etwa die Abmessungen der vormaligen Glasfasern; insbesondere auch das entsprechende Aspektverhältnis von etwa 5. Eine Messung der spezifischen inneren Oberfläche nach der BET-Methode ergibt Messwerte um 50 m²/g.

Die nach dem erfindungsgemäßen Verfahren erzeugten Kohlenstoffflocken beziehungsweise Kohlenstofffilamente aus porösem Kohlenstoff gewährleisten eine hohe Ionen-Mobilität und eignen sich daher besonders gut für die Herstellung von elektrochemischen Zellen aufladbarer Lithium-Batterien. Diese Eignung ist auf den Anteil an Makroporen und das von ihnen gebildete zusammenhängende Kanalsystem zurückzuführen. Denn im Vergleich zu Mikro- oder Mesoporen (mit Porengrößen bis 50 nm) zeigen Makroporen (mit Porengrößen > 50 nm) einen geringeren Grad an Ionen-Mobilität behindernden geometrischen Effekten. Dazu gehören die sogenannte "Tortuosität" und die "Konstriktivität".

Unter Tortuositätit wird der Grad der Gewundenheit der Transportwege verstanden. Dieser wird sowohl durch den Anteil an Makroporen als auch durch das Kanalsystem bestimmt, über das die Makroporen miteinander verbunden sind.

In ähnlicher Weise wirkt sich auch ein großer Anteil an Makroporen auch die lokale Konstriktivität aus, die den Widerstand der Poren gegen Diffusionsprozesse beschreibt und die vom Verhältnis der Größe der diffundierenden Teilchen und dem Porendurchmesser abhängt. Die Konstriktivität wird durch einen hohen Anteil an Makroporen erhöht und dadurch die Ionen-Mobilität verbessert.

Für die angestrebte diffusionsverbessernde Wirkung ist somit ein Grad an Makroporosität innerhalb der Aktivmaterialschicht der Batterie erforderlich. Diese wird von den darin verteilten Kohlenstoffpartikeln lokal bereitgestellt. Der Elektrolyt und die darin gelösten Aktivmaterial-Ionen können die Aktivmaterialschicht durch diese Partikel hindurch lokal relativ leicht und schnell durchdringen. Andererseits stehen für den Elektronentranssport die Wandungen der Kohlenstoffteilchen zur Verfügung.

## Patentansprüche

1. Verfahren für die Herstellung von porösen Kohlenstoffteilchen, umfassend folgende Verfahrensschritte:
(a) Bereitstellen von Poren enthaltenden nicht sphärischen Templat-Partikeln mit einem Aspektverhältnis von mehr als3,
(b) Infiltrieren der Poren des Templats mit einer Vorläufersubstanz für Kohlenstoff,
(c) Carbonisieren der Vorläufersubstanz, und
(d) Entfernen der Templat-Partikel unter Bildung der porösen Kohlenstoffteilchen,
**dadurch gekennzeichnet, dass** das Bereitstellen der Templat-Partikel umfasst:
(I) Erzeugen einer Glasschmelze eines Mehrkomponenten-Glases,
(II) Bilden nicht-sphärischer Glasteilchen durch Zerteilen der Glasschmelze oder Zerkleinern eines nach Erstarren der Glasschmelze erhaltenen Glases,
(III) Erwärmen der nicht-sphärischen Glasteilchen zwecks Phasentrennung in Phasenbereiche unterschiedlicher Zusammensetzung,
(IV) mindestens teilweises Extrahieren von einem der Phasenbereiche unter Bildung nicht-sphärischer, poröser Glasteilchen.

2. Verfahren nach Anspruch 1, **dadurch gekennzeichnet, dass** eine Glasschmelze aus einem Mehrkomponenten-Glas erzeugt wird, das Siliziumoxid, Boroxid und ein Alkalioxid enthält.

3. Verfahren nach Anspruch 2, **dadurch gekennzeichnet, dass** im Mehrkomponentenglas ein Anteil an SiO₂ im Bereich zwischen 40 und 70 Gew.-%, bevorzugt im Bereich zwischen 50 und 65 Gew.-% eingestellt.

4. Verfahren nach einem der vorhergehenden Ansprüche, **dadurch gekennzeichnet, dass** die Glasschmelze durch Zerstäuben mittels eines Gasstroms oder durch Schleudern in die nicht-sphärischen Glasteilchen zerteilt wird.

5. Verfahren nach einem der Ansprüche 1 bis 3, **dadurch gekennzeichnet, dass** die Glasschmelze durch Zerfasern in die nicht-sphärischen Glasteilchen zerteilt wird.

6. Verfahren nach einem der vorhergehenden Ansprüche, **dadurch gekennzeichnet, dass** beim Verfahrensschritt (II) nicht-sphärische Glasteilchen erzeugt werden, die tropfen-, plättchen-, faser- oder stäbchenförmig mit einem Aspektverhältnis von mindestens 5, vorzugsweise von mindestens 10 ausgebildet sind, und die eine mittlere Dicke von weniger als 50 µm, besonders bevorzugt weniger als 10 µm aufweisen.

7. Verfahren nach einem der vorhergehenden Ansprüche, **dadurch gekennzeichnet, dass** beim Verfahrensschritt (II) nicht-sphärische Glasteilchen erzeugt werden, die eine Längserstreckung von 50 µm oder mehr, bevorzugt eine Längserstreckung von 100 µm oder mehr haben.

8. Verfahren nach einem der vorhergehenden Ansprüche, **dadurch gekennzeichnet, dass** die Glasteilchen eine relative Dichte - bezogen auf die spezifische Maximaldichte des Werkstoffs - im Bereich von 40 % bis 70 %, vorzugsweise im Bereich von 50 % bis 65 %, aufweisen.

9. Verfahren nach einem der vorhergehenden Ansprüche, **dadurch gekennzeichnet, dass** in den nicht-sphärischen, porösen Glasteilchen Poren mit Porengrößen von mehr als 10 nm, bevorzugt Porengrößen von mehr als 50 nm und besonders bevorzugt Porengrößen von mehr als 100 nm erzeugt werden.
